Europäisches Patentamt

European Patent Office

Office européen des brevets

(11) Numéro de publication : **0 588 682 A1**

(12) **DEMANDE DE BREVET EUROPEEN**

(21) Numéro de dépôt : **93402122.1**

(22) Date de dépôt : **31.08.93**

(51) Int. Cl.$^5$ : **C08F 255/02, C09D 151/06**

(30) Priorité : **15.09.92 FR 9210975**

(43) Date de publication de la demande :
**23.03.94 Bulletin 94/12**

(84) Etats contractants désignés :
**BE DE DK ES FR GB GR IE IT LU NL PT**

(71) Demandeur : **ELF ATOCHEM S.A.**
**4 & 8, Cours Michelet La Défense 10**
**F-92800 Puteaux (FR)**

(72) Inventeur : **Verge, Christophe**
**38, Allée Fernand Léger**
**F-27300 Bernay (FR)**
Inventeur : **Boone, Alain**
**Corneville la Fouquetière**
**F-27300 Bernay (FR)**

(74) Mandataire : **Haicour, Philippe**
**Elf Atochem S.A., D.P.I. La Défense 10 - Cédex 42**
**F-92091 Paris La Defense (FR)**

(54) **Résines thermoplastiques résultant du greffage de polyoléfines chlorées par des monomères insatures et procédé d'obtention.**

㋣ Le greffage de polyoléfines chlorées par des monomères insaturés (acryliques, styréniques, vinyliques) en présence d'AIBN comme amorceur radicalaire conduit à des résines utilisables sous forme de solutions, le cas échéant diluables à l'eau, pour former des films durs, transparents, brillants et adhésifs, appréciés notamment dans la fabrication des compositions pour revêtements pigmentés ou non, telles que peintures, encres, primaires d'adhérence.

EP 0 588 682 A1

La présente invention est relative à de nouvelles résines thermoplastiques qui résultent du greffage de polyéthylène chloré par des monomères insaturés de type acrylique, styrénique ou vinylique. Elle a également pour objet le mode d'obtention de telles résines ainsi que leur application comme liants pour revêtements pigmentés ou non, tels que peintures, encres, primaires d'adhérence.

L'industrie des revêtements pigmentés ou non, et plus généralement celle des revêtements polymères, requiert des compositions filmogènes qui en constituent l'élément essentiel qu'elles présentent d'une part, des propriétés de film qui leur soient spécifiques et d'autre part, des propriétés qu'on dira optionnelles, variables selon leur mode d'application. Parmi les premières, l'adhésion sur le support, la souplesse et la ténacité, la transparence, le brillant et la dureté, qui doivent être présentes quelles que soient celles qui sont réclamées au titre des secondes telles que solubilité, diluabilité, hydrodispersibilité, etc.

La copolymérisation de comonomères acryliques entre eux ou avec d'autres monomères comme le styrène permet d'atteindre des copolymères filmogènes présentant un large éventail de températures de transition vitreuse (Tg) . C'est ainsi que par la seule copolymérisation de styrène et de méthacrylate de butyle, on balaye aisément un domaine de $T_g$ compris entre 20°C et 100°C. Par introduction d'autres comonomères, on confère au copolymère certaines fonctionnalités utiles, par exemple celle de le rendre hydrosoluble ou hydrodispersible grâce à sa copolymérisation partielle avec des monomères hydrophiles, comme le méthacrylate d'hydroxyéthyle.

Il est connu d'améliorer la souplesse du film et surtout son adhésion sur divers supports en combinant les copolymères acryliques avec d'autres polymères convenablement choisis, comme les polyéthylènes, oxydés ou non, ou encore les polyoléfines chlorées. Ces dernières sont réputées pour leur adhésion sur divers supports, même difficiles comme le polypropylène, et on les rencontre dans des formulations de primaires d'adhésion ou tout simplement dans les peintures et vernis (voir par exemple, J. P. Goulin, "Polyoléfines chlorées Eastman et leur utilisation pour améliorer l'adhérence sur polypropylène et autres matières plastiques", Double Liaison, n°349, 512, 1984, ou K. Middleton, "Coatings for polypropylene and other selected substances", Pol. Paint Colour Journal, 178, 16, 1988). Le simple mélange de polymères se heurte toutefois à de fréquents problèmes d'incompatibilité, d'où perte d'adhésion et de brillance.

On obtient toutefois un résultat meilleur en greffant les monomères insaturés sur le polymère. Aussi trouve-t-on dans l'art antérieur diverses résines greffées, par exemple les polyéthylènes oxydés greffés que relate la demande française FR-A-2597489, les polyéthylènes ou copolymères d'éthylène non oxydés greffés objets de la demande européenne EP-A-0313467, les polyoléfines chlorées greffées par du méthacrylate de méthyle de la demande japonaise JP58071966. Il n'y a cependant aucune évidence à prévoir les propriétés physiques des produits issus de ces greffages dont les résultats, en particulier l'adhésion et le brillant, varient considérablement non seulement avec la nature et la proportion des comonomères utilisés, mais encore avec la nature de l'amorceur de polymérisation, la température de greffage, et d'une façon générale toutes les conditions sous lesquelles est conduite l'opération.

Le problème qui s'est posé à la Demanderesse est l'obtention de résines qui soient à la fois transparentes, dures et brillantes, douées d'une bonne adhésion sur divers supports, en particulier sur l'acier inox, le verre, le bois, le polyamide, voire même le polypropylène. Le problème s'est également posé de telles résines dont les solutions organiques, pour des raisons de mise en oeuvre, soient hydrodispersibles. Il a été résolu avec des résines résultant d'une réaction de greffage entre 5 à 20 % de polyoléfine chlorée et 80 à 95 % de monomères insaturés tels que monomères acryliques, vinyliques ou styréniques, menée dans des conditions qui sont précisées plus loin.

Les polyoléfines chlorées utilisables dans l'invention se caractérisent par un poids moléculaire moyen compris entre 8.000 et 140.000 et une teneur en chlore comprise entre 15 et 40 %.

Parmi les monomères insaturés que l'on utilisera, seuls ou plus généralement en mélange, on doit distinguer les monomères oléophiles ou neutrophiles, comme le styrène et les acrylates et méthacrylates d'alkyle, monomères que pour la commodité du langage ont regroupera dans la suite sous l'appellation de monomères hydrophobes, et les monomères à caractère hydrophile, comme l'acide acrylique, l'acide méthacrylique, les acrylates ou méthacrylates de 2-hydroxy-éthyle ou de 2-hydroxy-propyle.

Les monomères hydrophobes (non hydrophiles) constituent généralement la partie la plus importante du copolymère greffé. C'est surtout par leur équilibre entre monomères "durs", c'est-à-dire caractérisés par un $T_g$ élevé de leur homopolymère (Styrène, $T_g$=100°C) et monomères "mous", c'est-à-dire à $T_g$ bas (Méthacrylate de butyle, $T_g$=20°C; acrylate de butyle, $T_g$=-50°C) que l'on règle la température de transition $T_g$ du copolymére greffé, et donc qu'on approche le meilleur compromis pour ses propriétés de souplesse et dureté. Une règle de composition qui permet d'approcher ce genre de compromis est donnée par la loi de Fox:

$$1/T_g = S(W_i/T_{gi})$$

qui relie la température de transition vitreuse $T_g$ d'un copolymère à celles $T_{gi}$ des homopolymères i qui le composent via leurs fractions pondérales respectives $W_i$. Un bon compromis pour les compositions selon l'invention se trouve avec des résines greffées contenant de 20 à 60 % de styrène.

Les monomères hydrophiles interviennent lorsqu'est envisagée pour les polymères greffés ou leurs solutions organiques la possibilité de leur dilution à l'eau. On en distingue deux types: les monomères neutralisables, acides ou basiques, tels l'acide acrylique, l'acide méthacrylique, l'acrylate ou le méthacrylate de diméthylaminoéthyle, l'acrylate ou le méthacrylate de diéthylaminoéthyle, l'acrylate ou le méthacrylate de terbutylaminoéthyle, qui participent à la faculté de mise en émulsion du copolymère en fonction de leur taux de neutralisation et qui sont indispensables à la dispersion dans l'eau des produits selon l'invention; les monomères hydrophiles neutres, tels que les acrylates ou méthacrylates d'hydroxyéthyle ou hydroxypropyle, l'acrylate ou le méthacrylate de diéthylèneglycol, qui sont optionnels, mais facilitent grandement la mise en émulsion.

Les résines selon l'invention sont ainsi des copolymères comportant 5 à 20 % de polyoléfine chlorée et 80 à 95 % de monomères insaturés de type acrylique, styrénique et/ou vinylique, monomères pouvant se répartir entre monomères hydrophobes, pris isolément ou en mélange, pour un maximum de 95 % et monomères hydrophiles, également pris isolément ou en mélange pour un maximum de 40 %. Pour obtenir des résines franchement hydrophiles, on replie ces formules sur des compositions comportant 5 à 10 % de polyoléfine chlorée, 90 à 95 % de monomères insaturés pouvant se répartir entre monomères hydrophobes, pris isolément ou en mélange, pour un maximum de 55 % et monomères hydrophiles, également pris isolément ou en mélange pour 10 à 40 %. Toutefois dans les formules dans lesquelles on aura choisi de faire intervenir l'acide acrylique ou l'acide méthacrylique comme monomères hydrophiles, on en limitera la contribution à 10-20 % parce qu'ils sont très hydrophiles, que leurs $T_g$ sont très élevés (respectivement 106°C et 228°C) et que leur contribution en excès risque de rendre de polymère greffé à la fois cassant et exagérément hydrophile. Le système préféré est le mélange styrène, méthacrylate de butyle, acide méthacrylique, méthacrylate d'hydroxyéthyle.

La préparation des polyéthylènes chlorés greffés selon l'invention se fait suivant le procédé ci-après, qui est également un objet du présent brevet.

Le greffage des polymères est, de façon connue, initié et entretenu grâce à des initiateurs de polymérisation radicalaire, comme par exemple les peroxydes (peroxyde de benzoyle, de ditertiobutyle, de lauryle), les perbenzoates (perbenzoate de tertiobutyle), les hydroperoxydes (hydroperoxyde de dicumyle), des diazoïques tels que le 2,2'-azobis(isobutyronitrile) ou le 2,2'-azobis(2-méthylbutyronitrile). En fait, l'invention ne fonctionne avec satisfaction que lorsque la réaction est démarrée avec des catalyseurs radicalaires à durée de demi-vie très faible (on les dénomme ci-après amorceurs de greffage), comme les diazoïques, pourtant réputés n'être que médiocres arracheurs de protons. Du fait de cette durée de demi-vie très limitée (environ 20 secondes dans les conditions de l'opération), il est nécessaire de les associer à des catalyseurs secondaires (dits "de cuisson"), catalyseurs plus lents, tels que le peroxyde de dicumyle ou le peroxyde de ditertiobutyle dont les durées de demi-vie sont comprises entre 1 et 2 heures à 140°C, et dont le rôle est de limiter la quantité de monomères résiduels dans le produit final.

La température de greffage est également un paramètre qui s'est révélé essentiel pour la qualité du produit final. Il est ainsi apparu que cette température doit être supérieure à 125°C, mais inférieure ou tout au plus égale à 140°C, et qu'il est préférable d'opérer vers 135°C.

Pour réaliser les résines selon l'invention, on opère en réacteur fonctionnant sous azote à pression atmosphérique ou sous faible pression et équipé d'un dispositif d'agitation efficace (par exemple agitateur à ancre). On introduit dans le pied de cuve la polyoléfine chlorée en solution dans un solvant organique, par exemple le xylène, et si nécessaire, un solvant complémentaire, et on porte le tout à la température retenue pour la réaction de greffage, puis lentement les monomères et le catalyseur de greffage. On laisse réagir, puis on introduit le catalyseur de cuisson; on poursuit la réaction, on refroidit, et on vidange le réacteur après avoir introduit si nécessaire un solvant de dilution, l'acétate d'éthyle par exemple.

Le choix des solvants utilisés dans l'invention n'est généralement guidé que par des considérations banales en la matière, puisqu'il est essentiellement question d'éviter les prises en masse en cours de polymérisation et de délivrer des résines le plus souvent en solution, avec des extraits secs variables. Ces extraits secs sont généralement compris entre 30 et 50 %, bien qu'il n'y ait pas réellement de limite inférieure qui leur soit imposée. Dans le cas des compositions voulues hydrodispersibles, on préfère toutefois l'éthoxypropanol à la fois comme diluant général ou comme vecteur des catalyseurs d'amorçage et de cuisson. De telles compositions font également partie de l'invention.

On ne retient comme conformes à l'invention que les résines qui présentent les caractéristiques essentielles (en voir la définition ci-dessous, au paragraphe "exemples") suivantes: dureté Persoz supérieure à 200, brillant égal ou supérieur à 90, adhésion mesurée par le test du quadrillage égale ou meilleure que 2 sur tous matériaux, exclusion faite du polypropylène. La teneur en monomères résiduels est une exigence supplémentaire que l'on impose aux résines finales, car il n'est guère d'application qui en tolère la présence à un niveau supérieur à 0,2 %.

Ces résines forment la base des compositions pour revêtements, pigmentés ou non, et en particulier des peintures, des encres et des primaires d'adhérence, pour utilisation sur supports variés, métaux, verres ou matières plastiques.

EXEMPLES

Dans les exemples qui suivent, on se réfère à différentes caractéristiques que l'on énonce ci-après, avec leur mode de détermination.

*Viscosité* : La viscosité des solutions de résines selon l'invention est effectuée au viscosimètre Brookfield à 25°C. Valeurs traditionnellement exprimées en millipascals.secondes (centipoises).

Les caractéristiques de films de résines sont obtenues à partir de films réalisés par projection au moyen d'un pistolet pneumatique pour peinture de solutions de résines à viscosité adaptée le cas échéant par addition de solvant, puis séchage du film à 20°C sous 50 % d'humidité relative.

*Dureté* : On mesure des duretés pendulaires Persoz selon la norme NFT-30-016. On procède à 30°C, sur films de quelques dizaines de micromètres d'épaisseur appliqués sur verre, en atmosphère à 70 % d'humidité relative. La mesure est celle de la durée d'une oscillation du pendule et s'exprime en secondes.

*Résistance à la rayure* : On utilise la méthode classique de la dureté à la rayure selon Wolff-Wilborn (rayure aux crayons), selon les normes SNV 37 113, SIS 18 41 87; NEN 5350 ou MIL C 27 227.

*Adhésion* : On la mesure par un test de pelage-quadrillage, selon la norme NFT-30-038, sur acier lisse, acier inoxydable, verre, polypropylène et polyamide. On note l'adhésion sur une échelle de 0 à 5, la valeur 0 traduisant une adhésion excellente, et la valeur 5 l'absence d'adhésion.

*Brillance* : La mesure en est effectuée au brillancemètre Trigloss Gardner 60° et 85° sur film sec appliqué sur support de polypropylène et de polyamide (polyamide 6), suivant la norme NFT 30-064.

*Transparence* : On l'apprécie de façon subjective par l'examen direct du produit de réaction. Les réactifs utilisés sont tous des produits transparents; aussi le défaut de transparence du produit final est-il immédiatement perceptible (solution de résines troubles ou nacrées).

Les produits selon l'invention sont fréquemment délivrés sous la forme des solutions sous laquelle ils ont été élaborés. Leur extrait sec est donc une caractéristique utile pour l'utilisateur. C'est également une valeur de contrôle de la réaction de greffage, puisqu'un écart entre l'extrait sec théorique et l'extrait sec obtenu témoigne de ce qu'une partie des monomères n'est pas entrée en réaction. L'extrait sec est déterminé par pesée d'un échantillon d'environ 1 gramme de résine disposé dans une coupelle tarée avant et après exposition de deux heures à une température proche de 100°C en étuve ventilée; il est mesuré par le rapport exprimé en pour-cent du poids final au poids initial. En ce qui concerne l'appréciation des taux de monomères résiduels, on double la mesure d'une analyse chromatographique.

La polyoléfine chlorée qui a été utilisée dans les exemples qui suivent est un polyéthylène chloré dont la masse moléculaire est d'environ 18.000, dont le titre en chlore est d'environ 30 %, et qui est délivrée en solution à 50 % dans le xylène par Kodak sous la dénomination CP 343.

## *Exemple 1*

Dans un réacteur d'une vingtaine de litres, dont l'agitation est assurée par le jeu d'une ancre et d'une contre-pale, et muni d'un dispositif de purge par azote, on charge le pied de cuve avec une solution de polyéthylène chloré constituée de 1,34 kg d'une solution de polyoléfine chlorée à 50 % dans le xylène (CP 343) et 0,48 kg d'acétate de butyle. Le pied de cuve est porté à 135°C sous azote, puis on y coule séparément le mélange de monomères constitué de 2,8 kg de styrène, de 2,9 kg de méthacrylate de butyle, de 1,16 kg de méthacrylate de 2-hydroxyéthyle, de 0,44 kg d'acide méthacrylique et le catalyseur de polymérisation constitué d'un mélange de 0,04 kg d'azo-isobutyronitrile et de 2,54 kg d'acétate de butyle. Cette coulée est réalisée en 2 heures 30, le contenu du réacteur étant maintenu à 134-135°C. On coule alors en une heure environ le catalyseur de cuisson, constitué de 0,06 kg de peroxyde de tertiobutyle et de 4,7 kg d'acétate de butyle. On laisse la réaction se poursuivre durant 4 heures à 135°C. On refroidit à moins de 75°C pour introduire le solvant de dilution, à savoir 3,56 kg d'acétate d'éthyle. On refroidit et on vidange un produit visqueux, parfaitement transparent, qui offre les caractéristiques suivantes :

- Extrait sec à 90°C ⇨ 43,8 %
- Transparence ⇨ excellente
- Taux de monomères résiduels ⇨ 0,21 %

## *Exemple 2*

Dans cet exemple, on compare les performances d'une résine greffée selon l'invention (film IV), de la paraffine chlorée seule (film I), d'un copolymère styrène/acrylique seul (film II) et du simple mélange physique de la paraffine chlorée et du copolymère styrène/acrylique (film III). La résine greffée est celle qui provient de l'exemple 1 ci-dessus; le copolymère styrène/acrylique a été obtenu par le même processus, mais sans introduction de polyoléfine chlorée. Les propriétés des films obtenus sont rapportées sur le tableau ci-après.

| Films | Film I | Film II | Film III | Film IV |
|---|---|---|---|---|
| Epaisseur (µm) | 36 | 30 | 40 | 22 |
| Dureté Persoz (s) | 121 | 259 | 248 | 254 |
| Dureté "crayon" | B | F | HB | F |
| Brillance 60°/85 | | | | |
| - *sur polypropylène* | 90/91 | 91/93 | 87/88 | 90/92 |
| - *sur polyamide* | 86/92 | 88/93 | 84/89 | 91/94 |
| Quadrillage | | | | |
| Acier lisse | 0 | 3 | 5 | 0 |
| Inox | 0 | 2 | 5 | 0 |
| Verre | 1 | 5 | 5 | 1 |
| Polypropylène | 0 | 5 | 5 | 5 |
| Polyamide | 0 | 0 | 0 | 0 |

On constate que la polyoléfine chlorée seule présente une dureté qui est inférieure à celles des autres compositions, que le brillant du simple mélange de la polyoléfine chlorée avec le copolymère styrène/acrylique est très médiocre, que l'adhésion du la polyoléfine chlorée est bonne sur tous les supports, mais que cette propriété n'est conservée pour une part acceptable que par greffage, encore qu'on observe une exception sur le polypropylène sur lequel dans les conditions de la synthèse, cette adhésion ne s'exprime pas.

En outre, le produit résultant du greffage selon l'invention est parfaitement transparent, tandis que le mélange physique de la paraffine chlorée et des copolymères styrène-acryliques sont des produits nacrés, ce qui n'aurait que peu d'incidence sur la transparence des films minces si cela n'en altérait pas le brillant.

*Exemple 3*

On réalise une résine conformément à l'exemple 2, à la différence près qu'on utilise comme solvant de dilution, non pas 3,56 kg d'acétate d'éthyle, mais le même poids de xylène. Les propriétés essentielles de la composition de résine ainsi obtenue ne sont pas sensiblement altérées, mais le résultat de l'essai de quadrillage sur polypropylène passe de 5 à 2-3. C'est à la part de solvant aromatique (35 % du solvant) qu'on attribue la meilleure expression de la contribution de la polyoléfine chlorée à l'adhésion sur polypropylène du polymère greffé.

*Exemple 4*

Les essais relatés mettent en évidence l'influence de la température de greffage. Ils ont été effectués dans les conditions de l'exemple 1, avec tantôt du 2,2'-azobis(isobutyronitrile) (AIBN), tantôt du peroxyde de benzoyle (POBz) comme catalyseur d'amorçage. On a obtenu les résultats suivants:

| Catalyseur | T° de greffage | Résultats |
|---|---|---|
| AIBN | 80°C | Film cassant, à mauvaise adhésion |
| AIBN | 125°C | Film trouble, nacré |
| AIBN | 80°C | Film cassant, à mauvaise adhésion |
| POBz | 125°C | Film trouble, nacré |
| AIBN | 140°C | Film transparent, adhérent, souple |

*Exemple 5*

L'exemple illustre la façon dont on peut réduire le taux de monomères résiduels dans le produit final selon l'invention.

La réaction de greffage est conduite conformément à celle de l'exemple 1. Dans un l'essai comparatif, l'amorceur et le catalyseur de cuisson sont constitués d'AIBN. On obtient une résine d'extrait sec égal à 42,2 %, donnant un film à bonne transparence et excellent brillant, mais dont le taux de monomères résiduels s'établit à 1,2 % (styrène = 0,4 %, méthacrylate de butyle = 0,7, méthacrylate d'hydroxyéthyle + acide méthacrylique $\leq$ 0,2 %). Dans l'essai suivant, l'amorceur est l'AIBN et le catalyseur de cuisson le peroxyde de ditertiobutyle. On obtient une résine donnant un film également à bonne transparence et excellent brillant, dont le taux global de monomères résiduels s'établit de façon satisfaisante à moins de 0,25 %.

**Revendications**

1. Copolymères thermoplastiques résultant du greffage de 5 à 20 % d'une polyoléfine chlorée, et 80 à 95 % de monomères insaturés de type acrylique, styrénique et/ou vinylique, monomères pouvant se répartir entre monomères hydrophobes pris isolément ou en mélange pour un maximum de 95 % et monomères hydrophiles, également pris isolément ou en mélange pour un maximum de 40 %.

2. Copolymères selon la revendication 1, caractérisés en ce qu'ils comportent 5 à 10 % de polyoléfine chlorée et 90 à 95 % de monomères insaturés pouvant se répartir entre monomères hydrophobes, pris isolément ou en mélange, pour un maximum de 55 % et monomères hydrophiles, également pris isolément ou en mélange, pour 10 à 40 %.

3. Copolymères selon la revendication 2, caractérisés en qu'ils comprennent de 10 à 20 % d'acide acrylique ou méthacrylique à titre de monomères acryliques à caractère hydrophile.

4. Copolymères selon les revendications 1 ou 2, caractérisés en ce que les monomères acryliques, styréniques et/ou vinyliques à caractère hydrophobe sont pris dans le groupe constitué par le styrène et les acrylates ou méthacrylates d'alkyle.

5. Copolymères selon les revendications 1 ou 2, caractérisés en ce que les monomères acryliques, styréniques et/ou vinyliques à caractère hydrophobe sont pris dans le groupe constitué par le styrène et les acrylates ou méthacrylates de butyle.

6. Copolymères selon les revendications, 4, ou 5, caractérisés en qu'ils comprennent de 20 à 60 % de styrène à titre de monomère à caractère hydrophobe.

7. Copolymères selon les revendications 1 ou 2, caractérisés en ce que les monomères acryliques, et/ou vinyliques à caractère hydrophile sont pris dans le groupe constitué par l'acide acrylique, l'acide méthacrylique, l'acrylate et le méthacrylate de 2-hydroxyéthyle, l'acrylate et le méthacrylate de 2-hydroxypropyle.

8. Copolymères selon la revendication 1, caractérisés en ce que la polyoléfine chlorée a un poids moléculaire moyen (Mw) compris entre 8.000 et 140.000, et une teneur en chlore comprise entre 15 et 40 %.

EP 0 588 682 A1

9. Procédé pour l'obtention d'une polyoléfine chlorée greffée de monomères acryliques, styréniques et/ou vinyliques consistant à provoquer le greffage en solution organique desdits monomères sur la polyoléfine chlorée en solution organique à une température comprise entre 125 et 140°C en présence d'un catalyseur radicalaire d'amorçage et à poursuivre la réaction en présence d'un catalyseur radicalaire de cuisson à cette température.

10. Procédé pour l'obtention d'une polyoléfine chlorée greffée selon la revendication 9, caractérisé en ce que le catalyseur radicalaire d'amorçage est constitué par l'azoisobutyronitrile.

11. Procédé pour l'obtention d'une polyoléfine chlorée greffée selon la revendication 9, caractérisé en ce que le catalyseur radicalaire de cuisson est constitué de peroxyde de dicumyle ou de peroxyde de ditertiobutyle.

12. Compositions pour la réalisation de revêtements pigmentés ou non pigmentés comportant de 30 à 50 % de copolymères tels que figurant dans la revendication n° 1 et de 50 à 70 % de solvant.

13. Compositions selon la revendication 12, caractérisées en ce que le tiers environ du solvant est constitué de xylène.

14. Compositions selon la revendication 13, à caractère hydrodiluable, caractérisées en ce que le solvant est composé pour l'essentiel d'éthoxypropanol.

15. Application des compositions selon les revendications 12 à 14 à la réalisation de revêtements pigmentés ou non, tels que peintures, encres, primaires d'adhérence.

7

Office européen
des brevets

**RAPPORT DE RECHERCHE EUROPEENNE**

Numero de la demande

EP 93 40 2122

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | DD-A-135 622 (VEB CHEMISCHE WERKE BUNA)<br>* revendications *<br>* exemples *<br>--- | 1-3 | C08F255/02<br>C09D151/06 |
| X | CHEMICAL ABSTRACTS, vol. 99, no. 24,<br>Décembre 1983, Columbus, Ohio, US;<br>abstract no. 196738h, 'COATING COMPOSITIONS'<br>page 94 ;<br>* abrégé *<br>& JP-A-58 071 966 (TORAY IND.) 28 Avril 1983<br>--- | 1,9,12,<br>15 | |
| A | EP-A-0 226 387 (HITACHI CHEMICAL)<br>* abrégé; revendications *<br>* page 4, ligne 16 - ligne 38 *<br>* page 5, ligne 52 - page 6, ligne 21 *<br>----- | 1-15 | |

| | DOMAINES TECHNIQUES RECHERCHES (Int.Cl.5) |
|---|---|
| | C08F<br>C09D |

Le présent rapport a été établi pour toutes les revendications

| Lieu de la recherche | Date d'achèvement de la recherche | Examinateur |
|---|---|---|
| LA HAYE | 29 Novembre 1993 | Mettler, R-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)